Europäisches Patentamt

European Patent Office

Office européen des brevets

(11) Publication number: **0 436 328 A2**

## (12) EUROPEAN PATENT APPLICATION

(21) Application number: **90313613.3**

(22) Date of filing: **13.12.90**

(51) Int. Cl.⁵: **C08F 4/606**, C08F 4/602, C08F 10/00

(30) Priority: **13.12.89 JP 321489/89**
**06.02.90 JP 25269/90**
**07.02.90 JP 25983/90**
**23.05.90 JP 131226/90**
**15.06.90 JP 155251/90**
**18.06.90 JP 157560/90**

(43) Date of publication of application:
**10.07.91 Bulletin 91/28**

(84) Designated Contracting States:
**BE DE ES FR GB IT NL**

(71) Applicant: **MITSUI TOATSU CHEMICALS, Inc.**
**2-5 Kasumigaseki 3-chome**
**Chiyoda-Ku Tokyo 100(JP)**

(72) Inventor: **Asanuma, Tadashi**
**4-1-133, Toriishi 3-chome**
**Takaishi-shi, Osaka(JP)**
Inventor: **Morita, Kiyomi**
**1-2-205, Yayoicho 3-chome**
**Izumi-shi, Osaka(JP)**
Inventor: **Iwatani, Tutomu**
**7-2-225, Kamo 4-chome**
**Takaishi-shi, Osaka(JP)**
Inventor: **Takeuchi, Katsumi**
**10-11-335, Kamo 4-chome**
**Takaishi-shi, Osaka(JP)**

(74) Representative: **Hutchins, Michael Richard et al**
**Graham Watt & Co. London Road Riverhead**
**Sevenoaks, Kent TN13 2BN(GB)**

(54) **Method for polymerizing alpha-olefin.**

(57) A method for polymerizing an $\alpha$-olefin comprises the step of polymerizing an $\alpha$-olefin in the presence of a catalytic system which comprises:

(a) a transition metal catalytic component which comprises a titanium compound free of ligand consisting of hydrocarbon residues;

(b) a titanium, zirconium or hafnium compound having, as a ligand, at least one cyclopentadiene, or polycyclic condensed-ring compound of cyclopentadiene, or alkyl-substituted derivatives thereof; and

(c) an organic aluminum compound.

The method makes it possible to produce highly stereoregular poly($\alpha$-olefins) having a relatively wider molecular weight distributions and thus has high industrial value.

EP 0 436 328 A2

## METHOD FOR POLYMERIZING $\alpha$ -OLEFIN

### BACKGROUND OF THE INVENTION

(Field of the Invention)

The present invention relates to a method for polymerizing an $\alpha$ -olefin. More specifically, the present invention pertains to a method for producing highly sterically regulated poly($\alpha$ -olefins) having relatively wide molecular weight distributions using a catalyst containing a specific transition metal compound.

(Description of the Prior Art)

Polyolefins have generally been produced by polymerizing olefins in the presence of a catalyst comprising a transition metal compound and an organometal compound. Moreover, polyolefins having a variety of molecular weight distributions have been needed depending on the applications thereof. Therefore, such polyolefins have generally been prepared by properly selecting a catalyst to be used. The relation between the kinds of catalysts and the moleculr weight distribution of the resulting polyolefins has not yet been clearly elucidated and in general a polyolefin having a desired molecular weight distribution has been produced by synthesizing a catalyst according to a rule of trial and error and polymerizing an olefin in the presence of the catalyst. Therefore, there have been known a variety of catalytic systems which can provide a polyolefin having a narrow molecular weight distribution and that having a wide molecular weight distribution.

However, the foregoing catalytic systems differ from one another with regard to the reagents used, production methods, manner of use or the like, and hence it is very difficult to produce polyolefins having different molecular weight distributions in the same polymerization system by changing the kinds of catalysts used, in particular when an $\alpha$ - olefin such as propylene is polymerized, the stereoregularity of the resulting polymers greatly varies depending on the kinds of catalitic systems used. Under such circumstances, it is quite difficult to change only the molecular weight distribution.

### SUMMARY OF THE INVENTION

Accordingly, an object of the present invention is in general to provide a method for polymerizing an $\alpha$ -olefin and more specifically, to provide a method for producing a highly sterically regulated poly($\alpha$ -olefin) having a relatively wide molecular weight distribution using a catalyst containing a specific transition metal compound.

Other objects of the present invention will be apparent from the following detailed description.

The inventors of this invention have conducted various studies to eliminate the foregoing drawbacks associated with the conventional methods for polymerizing $\alpha$ -olefins, as a result have found that a specific catalytic system is effective for producing polyolefins having a wide molecular weight distribution and thus have completed the present invention on the basis of this finding.

Consequently, according to the present invention, there is provided a method for polymerizing an $\alpha$ -olefin which comprises the step of polymerizing an $\alpha$ -olefin in the presence of a catalytic system comprising:

(a) a transition metal catalytic component which comprises a titanium compound free of ligand consisting of hydrocarbon residues;

(b) a titanium, zirconium or hafnium compound having, as a ligand, at least one cyclopentadiene, or polycyclic condensed-ring compounds of cyclopentadiene, or alkyl-substituted derivatives thereof; and

(c) an organic aluminum compound.

### DESCRIPTION OF THE PREFERRED EMBODIMENTS

Examples of the transition metal catalytic component which comprises a titanium compound free of ligand consisting of hydrocarbon residues used in the present invention include those comprising halides of titanium and alkoxides of titanium as the titanium compound, preferably those containing trivalent or tetravalent titanium halides as the titanium compound, more preferably those containing titanium trihalides and titanium tetrahalides as the titanium compound and most preferably those containing titanium trichloride and titanium tetrachloride as the titanium compound. As specific examples thereof, there have already been known a variety of compounds. For instance, there have been known titanium trichloride-containing transition metal catalytic component obtained by reducing titanium tetrachloride with metal aluminum and/or organoaluminum to give titanium trichloride, then optionally treating the resulting titanium trichloride with any of a variety of electron-donating compounds (it is also known that these electron-donating compounds are used in the reduction) and optionally treating with an electron-accepting compound; and catalytic systems comprising titanium tetrachloride and an optional electron-donating compound which are supported by a carrier (specific examples thereof are disclosed in, for instance, the following references: Ziegler-Natta Catalysts and Polymerization by John Boor Jr. (Academic Press); Journal of Macromolecular Science Reviews in Macromolecular Chemistry and Physics, 1984, C24(3), pp. 355-385; and ibid, 1985, C25(1), pp. 578-597).

If a catalyst comprising titanium tetrachloride and a diester of an aromatic dicarboxylic acid supported by a magnesium halide is used as the transition metal catalytic component among others, there can be obtained polyolefins having a relatively narrow molecular weight distribution in the absence of a titanium, zirconium or hafnium compound having, as a ligand, at least one cyclopentadiene, or polycyclic condensed-ring compounds of cyclopentadiene, or alkyl-substituted derivatives thereof, while polyolefins having a broad molecular weight distribution can be obtained by adjusting the amount of the foregoing titanium, zirconium or hafnium compound having, as the ligand thereof, at least one cyclopentadiene, or polycyclic condensed-ring compounds of cyclopentadiene, or alkyl-substituted derivatives thereof to be added. Thus, polymers having various molecular weight distributions over a wide range can be produced using the same catalyst.

As the magnesium halide used for producing particularly preferred transition metal catalytic component employed in the present invention, there may be used, for instance, magnesium halides substantially free of water, and those having a water content of not more than several % may in general be used. Specific examples of the magnesium halides are magnesium chloride, magnesium bromide, or a complex thereof with ethers or monoesters, or eutectic crystals of magnesium chloride and magnesium bromide.

Examples of the phthalic acid diesters useful as the diesters of aromatic dicarboxylic acids are preferably esters of phthalic acid with alcohols having 1 to 12 carbon atoms such as dimethyl phthalate, diethyl phthalate, dipropyl phthalate, dibutyl phthalate, dioctyl phthalate, didecyl phthalate, diphenyl phthalate, dibenzyl phthalate and di-2-ethylhexyl phthalate as well as mixed diesters of phthalic acid such as butyl benzyl phthalate and ethyl hexyl phthalate.

In the tetravalent titanium halides suitably used in the present invention, the halogen is preferably chlorine, and, for example, a particularly preferred halide is titanium tetrachloride. However, titanium halides in which a proportion of the halogen atoms have been substituted with alkoxy groups may also be used. In this respect, the halogenated titanium compounds may be used after they have been reacted in advance with a diester of phthalic acid to form a complex.

Examples of the titanium, zirconium or hafnium compounds having at least one cyclopentadiene, or polycyclic condensed-ring compounds of cyclopentadiene, or alkyl-substituted derivatives thereof as the ligand used in the present invention are compounds having, as a ligand, cyclopentadiene whose hydrogen atoms may be partially or completely substituted with alkyl groups, a polycyclic condensed-ring compound of cyclopentadiene such as indenyl or fluorenyl group or a polycyclic condensed-ring compound of cyclopentadiene whose hydrogen atoms are partially or completely substituted with alkyl groups. Moreover, if the compound has, as the ligand, these polycyclic condensed-ring compounds, these compounds may be hydrogenated after coordinating them to titanium or zirconium compounds. Among these titanium, zirconium or hafnium compounds, compounds of trivalent or tetravalent metals are preferred and in particular, those of titanium are preferably used. These titanium, zirconium or hafnium compounds having at least one cyclopentadiene, or polycyclic condensed-ring compounds of cyclopentadiene, or alkyl-substituted derivatives thereof as the ligand may be used by adding to the polymerization system together with the foregoing transition metal catalytic component and an organic aluminum compound as will be detailed below during the polymerization, but they may be used in the form of a mixture with the transition metal catalytic component. In this case, they must not be added to polymerization system during the polymerization. The molar ratio of the titanium, zirconium or hafnium compounds having at least one cyclopentadiene, or polycyclic condensed-ring compounds of cyclopentadiene, or alkyl-substituted derivatives thereof as the ligand, to the titanium compound free of hydrocarbon groups as the ligands, during the polymerization, preferably ranges from 1:1 to 0.0001:1. If the ratio is less than 0.0001:1, the effect of broadening the molecular weight distribution of the resulting polymer cannot be expected at all. The titanium, zirconium or hafnium compound having, as a ligand, at least one cyclopentadiene, or polycyclic condensed-ring compounds of cyclopentadiene, or alkyl-substituted derivatives thereof in the transition metal catalytic component, the transition metal catalytic component can be prepared in the coexistence of a titanium compound free of hydrocarbon groups as ligands, However, the simplest method for obtaining a catalyst having excellent quality is by simultaneously pulverizing a carrier, a titanium halide and the titanium, zirconium or hafnium compound having at least one cyclopentadiene, or polycyclic condensed-ring compounds of cyclopentadiene, or alkyl-substituted derivatives thereof as the ligand. In this case, it is preferable simultaneously to use an electron-donating compound as has been explained above. In order more effectively to use the titanium, zirconium or hafnium compound having at least one cyclopentadiene, or polycyclic condensed-ring compounds of cyclopentadiene, or alkyl-substituted derivatives thereof as the ligand, a magnesium halide and the titanium, zirconium or hafnium compound having at least one cyclopentadiene, or polycyclic condensed-ring compounds of cyclopentadiene, or alkyl-substituted derivatives thereof as the ligand are simultaneously pulverized, an aromatic dicarboxylic acid and a titanium halide are added to the pulverized mixture, then simultaneously pulverized. The activity of the resulting catalyst or the stereoregularity of the resulting polymer can be further enhanced by heat-treating the co-pulverized mixture together with a hydrocarbon compound or a halogenated hydrocarbon compound.

Alternatively, the transition metal catalytic component is dispersed in a solvent which does not dissolve the titanium, zirconium or hafnium compound having at least one cyclopentadiene, or polycyclic condensed-ring compounds of cyclopentadiene, or alkyl-substituted derivatives thereof as the ligand and a solution of the titanium, zirconium or hafnium compound having at least one cyclopentadiene, or polycyclic condensed-ring compounds of cyclopentadiene, or alkyl-substituted derivatives thereof as the ligand in a solvent is added to the slurry containing the transition metal catalytic component. Thus, an excellent effect of broadening the molecular weight distribution of the resulting polymer can be attained even when a relatively small amount of the titanium, zirconium or hafnium compound having at least one cyclopentadiene, or polycyclic condensed-ring compounds of cyclopentadiene, or alkyl-substituted derivatives thereof as the ligand is used and catalytic systems which can provide polymers having a variety of molecular weight distributions can easily and simply be obtained according to this method. In this case, the transition metal catalytic component can be used after treating with a small amount of an olefin in advance in the presence of an organometal catalytic component.

Examples of the solvents which do not dissolve the titanium, zirconium or hafnium compound having at least one cyclopentadiene, or polycyclic condensed-ring compounds of cyclopentadiene, or alkyl-substituted derivatives thereof as the ligand are saturated hydrocarbon compounds such as propane, butane, pentane, hexane, heptane, octane, undecane, dodecane or mixture thereof. On the other hand, examples of solvents which can dissolve the titanium, zirconium or hafnium compound having at least one cyclopentadiene, or polycyclic condensed-ring compounds of cyclopentadiene, or alkyl-substituted derivatives thereof as the ligand are aromatic hydrocarbon compounds having 1 to 20 carbon atoms or halogenated hydrocarbon compounds such as benzene, toluene, ethylbenzene, xylene, cumene, cymene or those solvents whose hydrogen atoms are partially replaced with halogen atoms; methylene dichloride, chloroform, ethylene dichloride and trichloroethane.

Preferably, the concentration of the slurry ranges from 0.1 to 500 g/ $\ell$ and that of the titanium, zirconium or hafnium compound having at least one cyclopentadiene, or polycyclic condensed-ring compounds of cyclopentadiene, or alkyl-substituted derivatives thereof as the ligand ranges from 0.001 to 100 g/ $\ell$. The addition of the solution of the titanium, zirconium or hafnium compound having at least one cyclopentadiene, or polycyclic condensed-ring compounds of cyclopentadiene, or alkyl-substituted derivatives thereof as the ligand to the slurry containing the transition metal catalytic component is preferably performed under stirring and the concentrations of the solution and the slurry are preferably selected so that the titanium, zirconium or hafnium compound having at least one cyclopentadiene, or polycyclic condensed-ring compounds of cyclopentadiene, or alkyl-substituted derivatives thereof as the ligand is precipitated out when they are mixed together.

The preferred transition metal catalytic component is prepared according to the following method. The molar ratio of the diester of phthalic acid to the titanium halide preferably ranges from 0.3:1 to 1:0.3 and more preferably 0.5:1 to 1:0.5. This is because, if the molar ratio is beyond the range defined above, the activity of the resulting catalyst and the stereoregularity of the resultant polymers are insufficient. Moreover, the weight ratio of the titanium halide to the magnesium halide preferably ranges from 1: 0.001 to 1:0.5. When the co-pulverized titanium, zirconium or hafnium compound having at least one cyclopentadiene, or polycyclic condensed-ring compounds of cyclopentadiene, or alkyl-substituted derivatives thereof as the ligand is used, the molar ratio thereof to titanium tetrachloride preferably ranges from 1:1 to 0.0001:1 as has been defined above. If the ratio is less than 0.0001:1, the effect of broadening the molecular weight distribution of the resulting polymer cannot be expected at all.

The co-pulverized product thus obtained may optionally be subjected to a heat-treatment together with a hydrocarbon compound having 1 to 12 carbon atoms or a hydrocarbon compound whose hydrogen atoms are partially or completely replaced with chlorine, bromine and/or iodine atoms, at a temperature preferably ranging from 50 to 150° C.

During the co-pulverization, a carrier inert to the catalytic system may further be added and examples thereof are inorganic substances such as silica and alumina as well as polymeric compounds such as polyethylene, polypropylene and polystyrene.

Preferred examples of the organic aluminum compounds used in the present invention include trialkylaluminum such as trimethylaluminum, triethylaluminum, tripropylaluminum and tributylaluminum as well as those alkylaluminums in which one or two hydrocarbon groups are replaced with chlorine or bromine atoms, i.e., alkylaluminum halides.

In the present invention, an alkoxysilane or a substituted piperidine is preferably used as an agent for improving stereoregularity during the polymerization. Examples of the alkoxysilanes preferably used are organosilane compounds carrying an alkoxy group having 1 to 4 carbon atoms and examples of such alkoxy groups include those comprising alkyl or alkenyl groups having 1 to 12 carbon atoms to which an oxygen atom is bonded and examples of the remaining groups other than the alkoxy group are alkyl groups or alkenyl groups having 1 to 12 carbon atoms. In addition, examples of substituted piperidines preferably include piperidine compounds whose hydrogen atoms existing at the 1- and 6-positions are partially or completely replaced with alkyl groups or alkenyl groups having 1 to 12 carbon atoms.

The molar ratio: the organic aluminum compound/the agent for improving stereoregularity/titanium in the transition metal catalytic component ranges from 1:1:1 to 1:10000:10000 and in general 1:1:1 to 1:1000:1000.

In the present invention, the titanium, zirconium or hafnium compound having at least one cyclopentadiene, or polycyclic condensed-ring compounds of cyclopentadiene, or alkyl-substituted derivatives thereof as the ligand may be present in the catalyst containing a titanium compound as has been explained above or further it may be added to the polymerization system together with the foregoing catalyst.

The titanium, zirconium or hafnium compound having at least one cyclopentadiene, or polycyclic condensed-ring compounds of cyclopentadiene, or alkyl-substituted derivatives thereof as the ligand may be added to the polymerization system simultaneously with the initiation of the polymerization, or may be added thereto after the polymerization is performed at a predetermined extent, or if the polymerization is carried out in a reactor comprising at least two polymerization vessels connected to one another, the compound may be added only to the downstream polymerization vessel, or further the amount of the compound may be changed. The titanium, zirconium or hafnium compound is in general added to the polymerization system in the same ratio as that of the titanium compound free of hydrocarbon groups as ligands with respect to titanium.

The term "α -olefins" herein means α -olefins having 3 to 12 carbon atoms or mixture thereof, or mixture thereof with a small amount of ethylene. Specific examples of the α - olefins include propylene, butene-1, pentene-1, hexene-1, heptene-l, octene-1 and 4-methylpentene-1.

In the present invention, methods for the polymerization of α -olefins are not restricted to specific ones and the polymerization may be performed according to any known method such as the solution polymerization using an inert hydrocarbon as a polymerization medium; the bulk polymerization in which a liquid α -olefin serves as a polymerization medium; or the vapor phase polymerization substantially free of liquid medium. The polymerization can in general be performed at a temperature ranging from ordinary temperature to 150° C and a pressure ranging from ordinary pressure to 100 Kg/cm$^2$ . The polymerization method of the present invention can preferably be applied to random or block copolymerization of α -olefins or a mixture of an α -olefin with ethylene in addition to homopolymeri-zation of α -olefins. Moreover, the polymerization method can provide block copolymers excellent in physical properties when a titanium, zirconium or hafnium compound having at least one cyclopentadiene, or polycyclic condensed-ring compounds of cyclopentadiene, or alkyl-substituted derivatives thereof as the ligand is added only to the copolymerization step. Alternatively, the method of the present invention may be applied to continuous polymerization performed in a reactor comprising two or more polymerization vessels connected to one another. In the latter case, if the concentration in each polymerization vessel is changed, polymers having a wider molecular weight distribution can be prepared.

According to the catalytic system of the present invention, the hydrogen concentration in the polymerization vessel positioned at more downstream side can easily be lowered and thus polymers having a higher molecular weight can be produced in the later polymerization vessel. In the present invention, the hydrogen concentration in the polymerization vessel positioned at the downstream side can be reduced without purging hydrogen and, when compared with a method in which a conventional catalyst system is employed and the molecular weight of the resulting polymers is adjusted by purging a great amount of hydrogen in the later polymerization vessel, molded articles formed from the polymers obtained according to the method of the present invention have a surface free of any fish eyes. Thus, according to the method of the present invention, the hydrogen concentration of a later polymerization vessel can easily be lowered and polymers having a wider molecular weight distribution can be obtained by adopting such a method.

The method according to the present invention will hereunder be described in more detail with reference to the following non-limitative working Examples and the practical effect of the present invention will also be discussed in comparison with Comparative Examples given below.

Example 1

There was provided an oscillating mill equipped with four 4ℓ inner volume pots containing 9 Kg of steel balls having a diameter of 12 mm. There were added, to each pot, 300 g of magnesium dichloride, 75mℓ of diisobutyl phthalate, 60mℓ of titanium tetrachloride and 7 g of dicyclopenta-dienyl titanium dichloride in a nitrogen gas atmosphere and the contents of the pots were pulverized for 40 hours.

10 g of the foregoing co-pulverized product was introduced into a 200mℓ flask, 60mℓ of toluene was added to the flask, the mixture was stirred at 114°C for 30 minutes, then allowed to stand, followed by the removal of the supernatant. Then the solid content was washed with 100mℓ of n-heptane three times at 20°C and dispersed in 100 mℓ of n-heptane to give a slurry of a transition metal catalyst component. The resulting transition metal catalyst component contained 2.2% by weight of titanium and 14.5% by weight of diisobutyl phthalate.

A 5 ℓ inner volume autoclave which had been sufficiently dried and replaced with nitrogen gas was provided, 0.2mℓ of triethylaluminum diluted with 100mℓ of heptane, 0.1mℓ of cyclohexylmethyldimethoxysilane and 15 mg of the foregoing transition metal catalyst component were added to the autoclave, then 1.5 Kg of propylene and 3.2 Nℓ of hydrogen were added thereto and polymerization was performed at 70°C for 2 hours. After the completion of the polymerization, the unreacted propylene was purged, the product was dried at 80°C for 8 hours and weighed. Thus 550 g of a polypropylene was obtained. The intrinsic viscosity (hereinafter referred to as "$\eta$") of the polypropylene (a tetralin solution) as determined at 135°C was 1.64; the rate of residues remaining after extraction with boiling n-heptane determined by a Soxhlet extractor (the weight of the polymer remaining after extraction/the weight of the polymer before the extraction (expressed in percentage); hereunder referred to as "II") was 97.8% and the ratio: weight average molecular weight/number average molecular weight (hereinafter referred to as "MW/MN") determined by gel permeation chromatography (solvent: 1,2,4-trichlorobenzene; at 135°C ) was 6.8.

Comparative Example 1

The same procedures used in Example 1 were repeated except that the catalyst was prepared without using dicyclopentadienyl titanium dichloride and that the amount of hydrogen to be added was adjusted to 1.7 Nℓ during the polymerization to control $\eta$ to a value approximately equal to that of the polymer obtained in Example 1 to thus give 675 g of a powery polymer. The value of $\eta$ of this powder was 1.65, II was 98.1% and MW/MN was 5.5.

Example 2

The same procedures used in Example 1 were repeated except that dicyclopentadienyl zirconium dichloride was substituted for dicyclopentadienyl titanium dichloride to thus give 610 g of a powdery polymer. The value of $\eta$ of this powder was 1.57, II was 97.8% and MW/MN was 6.3.

Example 3

The same procedures used in Example 1 were repeated except that dicyclopentadienyl hafnium dichloride was substituted for dicyclopentadienyl titanium dichloride to thus give 545 g of a powdery polymer. The value of $\eta$ of this powder was 1.53, II was 97.6% and MW/MN was 6.9.

Example 4

With the catalyst obtained in Comparative Example 1, there were added, to 5 ℓ inner volume autoclave which had been sufficiently dried and replaced with nitrogen gas, 0.2mℓ of triethylaluminum diluted with 100mℓ of heptane, 0.1mℓ of cyclohexylmethyldimethoxysilane and 15 mg of the foregoing transition metal catalyst component, then 1.5 Kg of propylene and then 1.7 Nℓ of hydrogen were added to the autoclave and polymerization was performed at 75°C for 40 minutes. Then 0.5 mg of dicyclopentadienyl titanium dichloride was added and the polymerization was further continued for additional 1.5 hour. After the completion of the polymerization, the unreacted propylene was purged, the product was dried and weighed in the same manner. Thus 480 g of a polypropylene was obtained. The value of $\eta$ of the polypropylene was 1.95; II was 98.5% and MW/MN was 7.2.

Comparative Example 2

The same procedures used in Comparative Example 1 were repeated except that dicyclopentadienyl titanium dichloride was not used and that the amount of hydrogen to be added was changed to 1.4 Nℓ so that the molecular weight was equal to that of the polymer obtained in Example 4 to give 620 g of a polymer. The value of $\eta$ of the polypropylene was 1.98; II was 98.2% and MW/MN was 5.7.

Example 5

In Example 4, the polymerization time at the preceding stage was changed to one hour and that at the later stage, the polymerization was performed at 50°C for one hour after adding 0.5 mg of dicyclopentadienyl titanium dichloride while adjusting the partial pressure of ethylene to 5 kg/cm$^2$ to thus give 585 g of a block copolymer of ethylene and propylene having an ethylene content of 10.2% by weight. The value of $\eta$ of the polymer was 2.76 and MW/MN was 10.2.

Comparative Example 3

The same procedures used in Example 5 were repeated except that dicyclopentadienyl titanium dichloride was not used and the polymerization at the later stage was performed for 30 minutes to give 570 g of a copolymer. The value of $\eta$ of the polymer was 2.10 and MW/MN was 7.4.

Example 6

The same procedures used in Example 4 were repeated except that dicyclopentadienyl zirconium dichloride was substituted for dicyclopentadienyl titanium dichloride to give 645 g of a powdery polymer. The value of $\eta$ of the powder was 1.62, II was 98.0% and MW/MN was 6.6.

Comparative Example 4

The same procedures used in Example 4 were repeated, except that dicyclopentadienyl titanium dichloride was not used, to give 675 g of a powdery polymer. The value of $\eta$ of the powder was 1.65, II was 98.1% and MW/MN was 5.5.

Example 7

The polymerization was performed in the same manner with the catalyst obtained in Comparative Example 1, provided that the polymerization was carried out in the presence of 0.1 g of dicyclopentadienyl titanium dichloride without using hydrogen to give 142 g of a powdery polymer. The value of $\eta$ of the powder was 9.52, II was 99.5% and MW/MN was 9.5. The resulting polymer had a molecular weight higher than that of the polymer obtained in Comparative Example 5.

Comparative Example 5

The same procedures used in Example 7 were repeated, except that the polymerization was performed without using dicyclopentadienyl titanium dichloride, to give 158 g of a powdery polymer. The value of $\eta$ of the powder was 5.72, II was 99.4% and MW/MN was 6.0.

Example 8

The same procedures used in Example 7 were repeated except that the polymerization was performed using 5 Nℓ of hydrogen to give 650 g of a powdery polymer. The value of $\eta$ of the powder was 1.68, II was 98.2% and MW/MN was 6.8.

Example 9

The same procedures used in Example 8 were repeated except that dicyclopentadienyl zirconium dichloride was substituted for dicyclopentadienyl titanium dichloride to give 580 g of a powdery polymer. The value of $\eta$ of the powder was 1.57, II was 97.5% and MW/MN was 6.6.

Example 10

The catalyst slurry obtained in Comparative Example 1 was diluted with n-heptane to give 1 g/ℓ of a transition metal catalytic component and to the slurry there was added a 0.1 g/ℓ solution of dicyclopentadienyl titanium dichloride in toluene in a rate of 0.67 unit per 100 units of the transition metal catalytic component with stirring. According to a model experiment separately performed, approximately the entire amount of the dicyclopentadienyl titanium dichloride was precipitated.

The polymerization was performed in the same manner used in Example 1 except that 15 mg of the slurry was used as the transition metal catalytic component and that 4.5 Nℓ of hydrogen was used to give 495 g of a polypropylene. The value of $\eta$ of the polypropylene was 2.07, II was 98.3% and MW/MN was 7.2.

Example 11

The same procedures used in Example 10 were repeated except that 15 mg of the transition metal catalytic component per se and 0.1 mg of dicyclopentadienyl titanium dichloride were used and that 2.8 Nℓ of hydrogen was used to give 460 g of a polypropylene. The value of $\eta$ of the polymer

was 2.01, II was 98.0% and MW/MN was 6.2. The polypropylene had a molecular weight distribution wider than that of the polymers obtained in the each Comparative Examples, but narrower than that of the polymer obtained in Example 10.

Comparative Example 6

The same procedures used in Example 10 were repeated except that dicyclopentadienyl titanium dichloride was not employed and that the amount of hydrogen to be introduced was changed to 1.1 Nℓ so as to adjust the molecular weight of the resulting polymer to a value equal to that of the polymer obtained in Example 10 to give 420 g of a polymer. The value of $\eta$ of the polymer was 2.01, II was 98.1% and MW/MN was 5.6.

Example 12

The same procedures used in Example 10 were repeated except that the amount of dicyclopentadienyl titanium dichloride was changed to a rate of 0.3 unit per 100 units of the transition metal catalytic component and that the amount of hydrogen to be added was changed to 2.8 Nℓ to give 520 g of a polypropylene. The value of $\eta$ of the polymer was 2.01, II was 98.1% and MW/MN was 6.3. This indicates that the same effect as that achieved in Example 11 can be attained by the use of a smaller amount of dicyclopentadienyl titanium dichloride.

Example 13

A mixture of 300 g of magnesium chloride and 5 g of dicyclopentadienyl titanium dichloride was co-pulverized for 2 hours in advance with the oscillating mill used in Example 1, then 75mℓ of diisobutyl phthalate and 60 mℓ of titanium tetrachloride were added and the mixture was further pulverized for 40 hours to give a co-pulverized product. The co-pulverized product was treated in the same manner used in Example 1 to obtain a slurry of a transition metal catalytic component. The resulting transition metal catalytic component contained 2.3% by weight of titanium and 14.3% by weight of diisobutyl phthalate.

The polymerization was performed in the same manner used in Example 1 except that 15 mg of the foregoing transition metal catalytic component and 3.8 Nℓ of hydrogen were employed to thus give 495 g of a polypropylene. The value of $\eta$ of the polypropylene was 2.01, II was 98.2% and MW/MN was 7.4. This indicates that an effect higher than that achieved in Example 1 can be attained although the catalytic system was used in an amount smaller than that used in Example 1.

As has been described above in detail, the method of the present invention makes it possible to produce highly stereoregular poly($\alpha$-olefins) having a relatively wider molecular weight distribution and thus the present invention has high industrial value.

**Claims**

1. A method for polymerizing an $\alpha$-olefin comprising the step of polymerizing the $\alpha$-olefin in the presence of a catalytic system which comprises:

   (a) a transition metal catalytic component which comprises a titanium compound free of ligand consisting of hydrocarbon residues;

   (b) a titanium, zirconium or hafnium compound having, as a ligand, at least one cyclopentadiene, or polycyclic condensed-ring compound of cyclopentadiene, or alkyl-substituted derivatives thereof; and

   (c) an organic aluminum compound.

2. The method of claim 1 wherein the titanium, zirconium or hafnium compound having, as a ligand, at least one cyclopentadiene, or polycyclic condensed-ring compound of cyclopentadiene, or alkyl-substituted derivatives thereof (b) is contained in the transition metal catalytic component which comprises a titanium compound free of ligand consisting of hydrocarbon residues (a).

3. The method of claim 1 or claim 2 wherein the titanium compound free of ligand consisting of hydrocarbon residues included in the transition metal catalytic compound (a) is a titanium halide.

4. The method of claim 1 wherein the transition metal catalytic component which comprises a titanium compound free of ligand consisting of hydrocarbon residues (a) is a titanium compound supported by a magnesium halide.

5. The method of any one of claims 1 to 4 wherein the titanium, zirconium, or hafnium compound having, as a ligand, at least one cyclopentadiene, or polycyclic condensed-ring compound of cyclopentadiene, or alkyl-substituted derivatives thereof (b) is dicyclopentadienyl titanium dichloride.

6. The method of claim 1 wherein the transition metal catalytic component which comprises a titanium compound free of ligand consisting of hydrocarbon residues (a) and the titanium, zirconium or hafnium compound having, as a ligand, at least one cyclopentadiene, or polycyclic condensed-ring compound of cyclopentadiene, or alkyl-substituted derivatives thereof are supported by a magnesium halide.

7. The method of claim 6 wherein the titanium compound having, as a ligand, at least one cyclopentadiene, or polycyclic condensed-ring compound of cyclopentadiene, or alkyl-substituted derivatives thereof (b) is used after it is pulverized together with a magnesium halide.

8. The method of claim 1 wherein a product obtained by co-pulverizing a magnesium halide, a diester of an aromatic dicarboxylic acid, a tetravalent titanium compound having at least one halogen atom and the titanium, zirconium or hafnium compound having, as a ligand, at least one cyclopentadiene, or polycyclic condensed-ring compound of cyclopentadiene, or alkyl-substituted derivatives thereof (b) ; and then heat-treating the co-pulverized product in the presence of a hydrocarbon compound or a halogenated hydrocarbon compound is used in combination with an organic aluminum compound.

9. The method of claim 1 wherein a product obtained by co-pulverizing a magnesium halide, a diester of an aromatic dicarboxylic acid, a tetravalent titanium compound having at least one halogen atom, a halogenated hydrocarbon compound and the titanium, zirconium or hafnium compound having, as a ligand, at least one cyclopentadiene, or polycyclic condensed-ring compound of cyclopentadiene, or alkyl-substituted derivatives thereof (b); and then heat-treating the co-pulverized product in the presence of a hydrocarbon compound or a halogenated hydrocarbon compound is used in combination with an organic aluminum compound.

10. The method of claim 1 wherein a catalyst slurry is used, the slurry being prepared by adding a solution of the titanium compound having, as a ligand, at least one cyclopentadiene, or polycyclic condensed-ring compound of cyclopentadiene, or alkyl-substituted derivatives thereof (b) in a solvent to a slurry of the transition metal catalytic component which comprises a titanium compound free of ligand consisting of hydrocarbon residues (a) dispersed in a hydrocarbon solvent which does not dissolve the titanium compound having, as a ligand, at least one cyclopentadiene, or polycyclic condensed-ring compound of cyclopentadiene, or alkyl-substituted derivatives thereof (b).

11. A method for polymerizing an $\alpha$ -olefin in the presence of a catalyst system consisting of transition metal catalytic component which comprises a titanium compound free of ligand consisting of hydrocarbon residues (a) supported by a magnesium halide and an organic aluminum compound wherein the $\alpha$ -olefin is first polymerized in the absence of a titanium, zirconium or hafnium compound having, as a ligand, at least one cyclopentadiene, or polycyclic condensed-ring compound of cyclopentadiene, or alkyl-substituted derivatives thereof and then it is further polymerized in the presence of a titanium, zirconium or hafnium compound having, as a ligand, at least one cyclopentadiene, or polycyclic condensed-ring compound of cyclopentadiene, or alkyl-substituted derivatives thereof.